# EUROPEAN PATENT APPLICATION

(11) **EP 3 637 342 A1**
(43) Date of publication of application: **15.04.2020**
(21) Application number: 18199126.6
(22) Date of filing: 08.10.2018
(51) Int. Cl.: G06Q 20/06

(54) **METHOD AND SYSTEM FOR AUDITABLE AND INCENTIVE COMPATIBLE PREVENTION OF FRONT-RUNNING**

(71) Applicant: CTF Markets GmbH, 6302 Zug (CH)
(72) Inventor: Brack, Samuel, 10715 Berlin (DE); Gotthold, Franck, 10245 Berlin (DE); Weber, Michael, 10115 Berlin (DE)

(57) **Abstract**

The invention relates to a computer-implemented method for preventing front-running in a trading system. The method comprising the steps: storing a smart contract on a blockchain by a first computing device; initiating an electronic order message by a second computing device at the first computing device; sending an unspent transaction to an address on the blockchain by the second computing device; broadcasting a message on the blockchain by the second computing device, wherein the message is addressed to the smart contract, the message comprising a hash over: the unspent transaction address; an unused address of the second computing device; and the electronic order details; executing by the second computing device, after a timeout, the unspent transaction output in the following way: generating a script at the unspent transaction address, the script comprising a public key hash of the smart contract forwarding the output of the unspent transaction to the smart contract.

## Description

This patent application relates to the field of a method for front running proof digital trading. Specifically, the subject matter of this patent application relates to a computer implemented method that allows for auditable and incentive compatible trading while preventing front-running.

In most digital trading methods that aim to provide an auditable trail of transactions, a distributed ledger, usually a blockchain, is used for recording the trading activities. In such methods the transactional items are based on ownership entries in the distributed ledgers maintained by distributed nodes. While such systems provide an audit trail of the transactions, they do not provide a way to prevent 'front running'.

Front-running refers to the investment strategy of undertaking a transaction with advance knowledge of a transaction that will influence the price of the underlying security to capitalize on the trade. For instance, if a trader has prior knowledge that another trader or trading entity will buy a large volume of shares of a given stock, then he can anticipate that the price of this stock would rise. Based on this, he can buy shares from the stock himself at a lower price before the trading entity's large order, and sell them once the price has risen after the completion of the large order, thus making a sizeable profit.

US2018/0089759A1 discloses a method that provides a comprehensive audit trail of digital transactions in digital trading without any provisions for avoiding front-running. On the other hand, US 2016/0350749 A1 discloses a method that prevents front-running by using encrypted orders and involves a third party platform that manages individual customer's accounts.

The problem with the latter approach is that the third party controls customer accounts, thus it needs to be trusted, and takes away autonomy from the hands of the individual customers. Further, every customer has to trust that the third party provider does not violate their privacy by disclosing their trades. This also means that the third party gets a monopoly in such a system, in the manner of 'clearing houses' in the current stock market. Also, this makes it hard for new exchange markets to be set up, because they would need to have a contract with this third party.

Furthermore, the disclosed method involves at least three cryptographic key pairs per order for obscuring order details and adds needless complexity to the system. A system that does not involve a trusted third party, avoids the above problems. However, such a system needs to ensure that the interacting entities in the system are faithful to the system protocols. Here faithfulness refers to the well-known property describing robustness to rational manipulation in information revelation in computing protocols. In simple terms, protocols that ensure faithfulness are incentive compatible, in that no entity in the system has any incentive to not follow the protocol.

Apart from ensuring faithfulness to protocols, the system has to be devised in such a way that the data which is exchanged in the system (among system entities) and the actions that are taken in the system, are all verifiable and transparent. This facilitates subsequent auditing if required.

Thus, the basic problem is to provide a computationally simple system in which the interacting entities are faithful to the prescribed system protocols, which further ensures the verifiability and security of all data exchanges and actions in the system, and prevents front-running.

It is an object of the present application to solve these problems.

This object is solved by the trading system of claim 1. Advantageous further developments are represented by the features of the dependent claims and of the embodiments described.

In an embodiment, the suggested computer-implemented method comprises the following steps: a smart contract is stored on a blockchain by a first computing device. This computing device may be an entity that is responsible for trading digital transaction items e.g., digital securities, digital currencies etc., on digital exchanges. Here, 'computer-implemented' refers to a piece of executable code written in a computer programming language that is supported by a given blockchain. In this embodiment, the preferred traded assets are crypto currencies. Alternatively, the first computing device may trade items in any kind of market where orders are executed immediately/quickly: e.g., online casinos, future markets, sport bets, or stock markets.

Subsequently, a second computing device initiates an electronic order at the first computing device. This second computing device may belong to an individual customer, who can either be a company or an individual, technically called a market maker. The order is sent by the second computing device to the first computing device, not via the blockchain but using an off-chain channel. This off-chain channel can take many forms, including, but not limited to, a dedicated connection between the first computing device and the second computing device on the one hand, to encrypted emails messages on the other. It may also take the form of a web API. The basic idea is for the first computing device and the second computing device to have a separate channel other than the blockchain, hence referred to as an off-chain channel, where they can communicate without oversight.

The assets and accounts of the second computing device are on the blockchain. The first computing device has no access or control over these accounts. Thus, the second computing device maintains its autonomy from the first computing device. It should be noted that a blockchain is a preferred distributed ledger in this embodiment. Blockchain is preferred as it is open, verifiable and tamper proof. Furthermore, platforms based on blockchain such as Ethereum are widely used and have a wide user and developer base. Alternatively, any suitable distributed ledger may be used.

The order message initiated by the second computing device may contain order details. By way of illustration, and not limitation, the details may include the following information: Instruction to Buy/Sell; volume; price, market, limit, stop, stop-loss, sell-stop; and expiration, etc.

At the same time as initiating the electronic order, the second computing device sends an unspent transaction, or alternatively a transaction with an unspent output, to an address on the blockchain, which is random or seemingly random. Here 'random' and 'seemingly random' are used interchangeably throughout the application and they refer to the fact that from the perspective of malicious observers, the transaction is sent to an address that looks random, i.e., the address arouses no suspicions as it does not belong to the first computing device.

This transaction contains the funds that are needed to carry out the order initiated by the second computing device. Here 'unspent output' means that the receiving address may use the output funds in the transaction for future transactions. Funds may refer to a cryptocurrency such as Ether or any other blockchain specific currency, where the said blockchain supports smart contracts. Put simply, they may refer to any currency supported by a blockchain network that provides smart contract functionality.

The transaction is sent to a random address instead of the contract stored by the first computing device. In this way an observer cannot deduce that this transaction is meant for the first computing device and cannot know that the second computing device is placing, or has placed, an order on the first computing device. For the sake of the reader's understanding, this point is further elaborated below.

The order details can anyway not be known to observers because, as stated above, they are communicated by the second computing device to the first computing device using an off-chain channel. However, the skilled reader would note that if the above unspent transaction was addressed to the first computing device instead of a random address, it would *imply* that an order has been placed by the second computing device at the first computing device. And this knowledge of order placement, even without knowing the exact order details, can facilitate malicious observers in performing front-running.

After sending the transaction to a random address, the second computing device also sends a message to the contract and broadcasts the same on the blockchain with the message comprising a hash over: the unspent transaction; an unused address on the blockchain that belongs to the second computing device; and the electronic order details. However, since the message is hashed, no sensitive information related to the order is revealed to any observer. The hash may be performed by any of the widely used hashing algorithms, including but not limited to, SHA3-256, SHA3-512, or SHAKE256.

This message serves as a 'commit message' and can be later used for auditing purposes. In the context of the present application, a 'commit message' is a signed declaration from the second computing device that it is placing an order on the smart contract associated with the first computing device. For further information, the reader is referred to the term 'message' in the 'Glossary of Terms'. Put simply, the reader will note that the first computing device receives the order from the second computing device on an off-chain channel, with no public record of this order. The above 'commit message', which is broadcasted on the blockchain and is addressed to the contract associated with the first computing device, gives the assurance that an auditable trail of the second computing device's order is present on the blockchain.

Further, it should be noted that the second computing device sends the above 'commit message' from a freshly generated address. This means that no other computing device on the blockchain can trace the message back to the second computing device. Thus, it can be said that the message has been sent from an anonymous address. The second computing device will reveal this address publically on the blockchain when it forwards the funds on the random unspent transaction, something which will be described below in the paragraph after the next. The address may be revealed in a variety of ways, for example, by publishing it on a website associated with the second computing device, or better, in a smart contract that records the address, so once published, the address cannot be changed.

If the second device does not send the 'commit message' from an anonymous address, then sending the above unspent transaction to a random address will not serve its purpose. The purpose, which was to hide the fact that the second computing device has placed an order on the first computing device, will no longer be achieved. In fact, a malicious observer on the blockchain would be able to see that: a) the second computing device has sent a transaction to random address worth a certain amount of funds, **and** b) that it has sent a commit message to a smart contract associated with the first computing device. Thus, if the first computing device, by way of illustration and not limitation, deals with Bitcoin exchanges, then an observer would deduce that the second computing device has placed an order for Bitcoins worth certain amount of funds. Therefore, sending the 'commit' message from a known address would not only reveal that an order has been placed, it would also destroy the security/privacy-preserving effect of the random unspent transaction. Technically, in security parlance, this is called a *"Privacy Breach",* a scenario in which a latterly piece of revealed information also increases the likelihood of a formerly secure piece of information to be revealed.

After waiting for a suitable duration of time, the second computing device generates a script at the unspent transaction random address. The suitable duration of time, or timeout, is chosen by the second computing device to ensure that during this time, the first computing device has executed the order initiated by the second computing device. As stated above, the order may relate to trading digital transactional items on digital exchanges or other comparable markets.

This script contains the address, or the public key hash or the PPHK ('Pay to Public Hash Key'), of the contract. The script then forwards the output funds of the transaction to the contract. Technically, the funds can be forwarded to the contract in several ways. One method, by way of illustration and not limitation, would be for the script code to create a new transaction which contains the same amount of funds (or cryptocurrency value) as the existing transaction, and address it to the PPHK of the smart contract. Another way would be unlocking another smart contract in a multi-signature-setup that then sends the funds to its target. Multi-signature means that several addresses have to send their approval (could be manually controlled addresses, i.e. wallets) to one contract that pays out funds only if all multi-signers approve.

Thus, the first computing device shall receive the funds as payment for executing the order placed by the second computing device. Since all this is done on the blockchain, it is all part of the public record and can be audited later by any regulating authority. At the same time, this scheme also prevents front-running since the order and the payment details are only revealed publically after a certain delay, once the order has already been executed.

According to another embodiment, the smart contract stores the message broadcasted on the blockchain which is addressed to it. Furthermore, the smart contract also at least defines: a function to receive input, a first condition, a second condition and an action whose performance is dependent on the evaluation of the first and the second conditions. By way of illustration, and not limitation, an input may be provided to the function in the smart contract to trigger the action, if either the first, the second, or both the conditions are true.

In an embodiment, the access to at least some of the contents of the smart contract is restricted to the first computing device. For instance, only the first computing device should be able to access certain functions, such as those related to assigning tokens after the successful completion of an order. This can be achieved by devising an appropriate access control list (ACL) which may limit access to at least some of the content, both data and functions, of the smart contract, to the owner of the smart contract, in this case the first computing device.

Similarly, some functions could also, or only, be accessible to entities other than the first computing device. For instance, a function for placing orders on the contract has to be available to entities other than the first computing device, in this case the second computing device. Thus, the ACL should provide access to such functions to the second computing device.

In a further embodiment, the second computing device also sends the contents of the broadcasted message to the first computing device using an off-chain channel. The contents are not hashed but since they are sent on an off-chain channel, they are not visible to any malicious observer. By receiving the contents of the broadcasted message, the first computing device can hash these contents, and determine whether the hash matches with the hash sent to the smart contract by the second computing device. In this way, the first computing device can be sure that the second computing device has left a truthful record of its order and related activities on the public blockchain. Also, using this information, the first computing device can also check, for instance, if the random unspent transaction address has the required funds to carry out the order.

According to another embodiment of the present invention, the off-chain channel on which the second and the first device privately communicate is encrypted to protect against snooping. This can be done by the exchange of encryption keys between the first computing device and the second computing device through any out of band means such as email. Alternatively, virtual private network tunnels or SSL certificate exchanges can be used to secure the connection between the second computing device and the first computing device.

Further, in order to prevent an ISP in the middle to gain information about when the first and the second device communicate, random noise traffic may be injected into the communication channel. By that, any outside observer cannot derive information about the secured communication by observing the encrypted channel.

According to another embodiment of the present invention, the timeout or time delay before the second computing device forwards the funds at the random address transaction to the first computing device, is up to fifteen minutes. After the elapse of this time, the second computing device can be sure that the first computing device has already executed the order, and thus, the second computing device can execute the transaction and send the output funds of the transaction to the first computing device.

The timeout or time delay may be shorter or longer than fifteen minutes depending on the context in which the order has been placed. Factors such as historic order-completion times, current market order-volume, operating hours, and the type of market, may be taken into account to determine the appropriate time delay. The important point is that the second computing device needs to wait for an appropriate amount of time to be certain that the first computing device has executed the order, before transferring funds to it. This facilitates the prevention of front-running.

In an embodiment of the present invention, the script generated by the second computing device at the random transaction address is an Ethereum forwarding contract. An Ethereum forwarding contract typically involves simply resending incoming messages to some desired destination only if certain conditions are met. In the case of the present application, a script, the forwarding contract is generated on the random transaction address. The 'resending' refers to sending the output of the transaction, to the chosen destination, which in this case is the smart contract associated with the first computing device.

The conditions mentioned above which are required to be met before the forwarding contract sends the output of the transaction forward, may take different forms. For instance, a condition could be that there needs to be a certain amount of funds available at the address of the forwarding contract, below which it would not resend or forward funds to the target address. Alternatively, a condition could be for the forwarding contract to check the status of a variable/value in another smart contract, based on which it can decide whether or not, funds should be forwarded.

In an embodiment of the present invention, the first computing device can assign or burn tokens, to and from the second computing device, respectively, when certain conditions are satisfied.

It should be noted that in the above a 'token' can refer to a representation of any fungible tradable good such as currency, loyalty points, gold certificates, in-game items, etc. What a token represents in any given digital trading system depends on the specific tradable good(s) that the digital trading system specializes in trading.

The tokens are 'burned' in case the second computing device had made a trade order for 'Selling', and they are assigned (and minted) if the second computing device has made a trade order for 'Buying', where selling and buying refer to selling and buying the underlying tradeable good.

Furthermore, 'burning' a token, in simple terms means making the token permanently unspendable. This can be traditionally achieved in a number of ways. One way to burn tokens is by sending the tokens to a bogus address (an address with no known private key) so that the token is no longer usable. Alternatively, tokens may be burned by creating a contract which sends the tokens to itself and immediately self destructs. On the other hand, minting tokens refers to the production of new tokens by using the resources, for instance, computing resources, as required by the underlying blockchain.

Firstly, the smart contract receives an input in a function called by its owner, the first computing device. The first computing device calls this function after executing the order placed by the second computing device. The input to this function is the data of the broadcasted message in its unhashed form. This data contains the order details, an unused address that belongs to the second computing device, and the random unspent transaction address.

The smart contract then evaluates the first condition, which is to determine if it has received output funds from the random transaction address, which address it now knows since it has been provided to it in its unhashed form. The smart contract then hashes the received data, and compares it with the hash it earlier received from the second computing device. This corresponds to evaluating the second condition.

If the smart contract determines that it has received the output funds from the random transaction address, which is a true response of the evaluation of the first condition, and further determines that the two hashes match, which is a true response of the evaluation of the second condition, it will burn or assign tokens, from or to the unused address of the second computing device based on the order details. Finally, the first computing device may publish the proof of the finishing of the order by publishing the hashed values in clear text into a variable in the smart contract. In the end, the hash value is cleared from the list of pending transactions.

The skilled reader would note that since the first computing device assigns tokens to the second computing device only after it has confirmed that it has received the funds for the executed order, the second computing device has an incentive to transfer funds to the first computing device. This is because if it doesn't do so, then it would not be assigned any tokens. Thus, the disclosed method achieves protocol faithfulness.

On the other hand, the second computing device can also be certain that the first computing device would assign tokens to the second computing device, as the contract of the first computing device is publically visible and which stipulates that it will transfer tokens to the address from which it receives funds.

Furthermore, both the first computing device and the second computing device have an incentive to follow the protocol, since everything is being audited and the devices can be held accountable by a regulatory authority.

A further embodiment is a system, preferably according to the computer implemented method described above, which comprises: a first computing device which is associated with a smart contract on a blockchain; a second computing device which is configured to initiate an electronic order, to forward an unspent transaction to a random address on the blockchain, and to broadcast a message on the blockchain, the message comprising, the unspent transaction, an unused address on the blockchain, and the electronic order details; and the second computing device is further configured to: execute the unspent transaction output in the following manner: generate a script after a certain timeout at the transaction address comprising the public key hash of the smart contract, and send the output of the transaction to the contract address.

### DETAILED DESCRIPTION

### Glossary of Terms

**Address/P2PKH-** A blockchain address is a unique identifier that serves as a virtual location where cryptocurrency can be sent. The address itself usually consists of 26-35 alphanumericcharacters. This string is the public half of an asymmetric key pair. The standard format for an address is P2PKH (pay to public key hash). Devices on blockchain can generate addresses through cryptographic operations: The software generates a private key through an asymmetric signature algorithm and then derives the public key from the private one. The user signs with the private key and verifies that signature with the public key.

**Blockchain/Blockchain Network-** A public ledger of all transactions of a blockchain-based currency. One or more computing devices may comprise a blockchain network, which may be configured to process and record transactions as part of a block in the blockchain. Once a block is completed, the block is added to the blockchain and the transaction record thereby updated. In many instances, the blockchain may be a ledger of transactions in chronological order, or may be presented in any other order that may be suitable for use by the blockchain network. In some configurations, transactions recorded in the blockchain may include a destination address and a currency amount, such that the blockchain records how much currency is attributable to a specific address. In some instances, additional information may be captured. Such as a source address, timestamp, etc.

**Computing Device-** A computing device includes a processing unit (CPU or processor) and a system bus that couples various system components including the system memory such as read only memory (ROM) and random access memory (RAM) to the processor. The memory can include multiple different types of memory with different performance characteristics. The computing device can also include a cache of high-speed memory connected directly with, in close proximity to, or integrated as part of the processor. The computing device may further comprise a storage medium such as an internal or external hard drive. The drive can include types of drives with different performance characteristics. The computing device may take many forms including that of a laptop computer, a tablet, or any piece of hardware that is programmable and that can operate on a blockchain network.

**Message-** A message is a signed piece of information that is sent from one addresses on the blockchain to another. In the present application the message sent by the second computing device to the smart contract is referred to as a 'commit message' because it makes the order intent of the second computing device publically visible. Since it is a signed message, it cannot be repudiated by the second computing device.

**Protocol-** A protocol refers to the series of steps that a computing device follows when it exchanges data and/or executes commands in a computing system. A protocol may be coded into a software program or may be embedded on hardware. In the context of the present application, protocol refers to the entire series of steps, including all communications and commands that are executed therein, that the first computing device and the second computing device perform for the correct execution of an order, where a correct order execution results in the correct number of tokens and values.

**Script-** Script is a piece of code in any programming language that can transfer value from one address to another address on the blockchain.

**Smart Contract-** A smart contract is a computer protocol intended to digitally facilitate, verify, or enforce the negotiation or performance of a contract. Smart contracts allow the performance of credible transactions without third parties. These transactions are trackable and irreversible. Smart contracts are implemented by various blockchains such as Ethereum and Bitcoin.

Smart contracts help in the exchange of money, property, shares, or anything of value in a transparent, conflict-free way while avoiding the services of a middleman. They also define the rules and penalties around an agreement in the same way that a traditional contract does, but also automatically enforce those obligations.

**Transaction-** A transaction is a basic unit of task that is broadcast to
the blockchain network and collected into blocks. An example would be the transfer of cryptocurrency value (or funds) from one node to another on the blockchain network. A transaction typically references previous transaction outputs as new transaction inputs and dedicates all input Bitcoin values to new outputs. Transactions are not encrypted, so it is possible to browse and view every transaction ever collected into a block. Once transactions are buried under enough confirmations they can be considered irreversible. Standard transaction outputs nominate addresses, and the redemption of any future inputs requires a relevant signature. All transactions are visible in the block chain, and can be viewed with a hex editor

The disclosure may be more completely understood in consideration of the following description of various illustrative embodiments in connection with the accompanying drawings in which:
Figures 1a, 1b, 1c and 1d illustrates the method as it works on the Ethereum blockchain.
Figure 2 illustrates an example formulation of the forwarding contract in pseudo code.
Figure 3 illustrates a sequence diagram, which outlines the steps involved in a trading order, especially the function calls and the conditions that are evaluated by the interacting entities.

While the disclosure is amenable to various modifications and alternative forms, specifics thereof have been shown by way of example in the drawings and will be described in detail. It should be understood, however, that the intention is not to limit aspects of the disclosure to the particular illustrative embodiments described. On the contrary, the intention is to cover all modifications, equivalents, and alternatives falling within the spirit and scope of the disclosure.

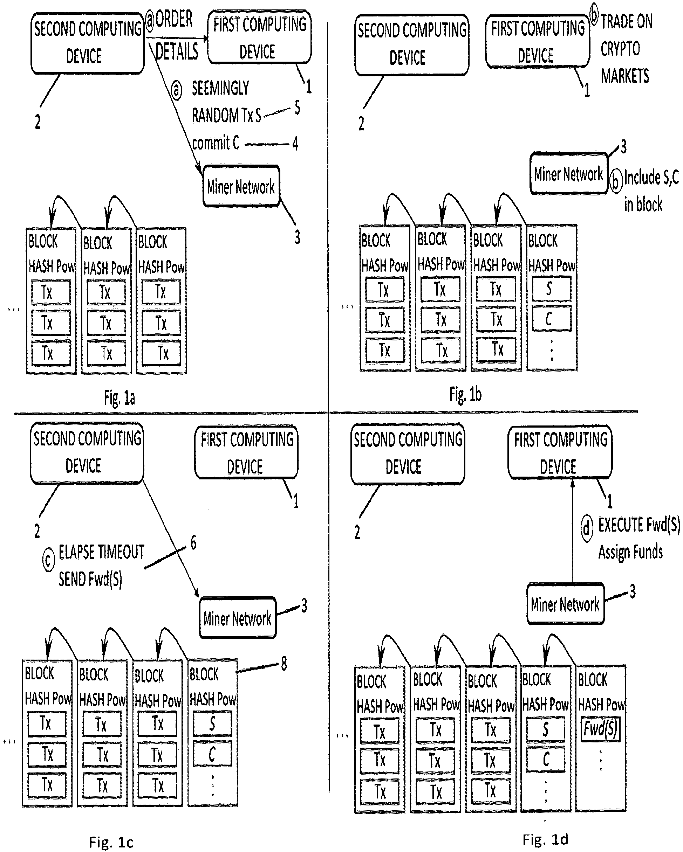

In Step (a) in Fig. 1a, the second computing device simultaneously sends out the order details to the first computing device via an off-chain channel and a seemingly random unspent transaction S to the Ethereum mining network (the blockchain).

The off-chain channel uses an Internet connection. Either VPN tunnels or SSL certificate exchanges can be used to secure the connection. The communication between the first computing device and the second computing device consists of commands to buy or sell assets. Of course, the messages have to be signed cryptographically in all cases.

Additionally, to create an auditable trail of this transaction, a commit message C is sent to the smart contract associated with the first computing device on the Ethereum blockchain. C contains a hash over a previously unused address A from the second computing device, unspent transaction S, the order details, and also preferably the public address of the first computing device in case a cancellation fee has to be collected.

The committed data is revealed after the first computing device executes its orders and thus an outside observer can always reconstruct the entire trade history of the system. The commit is placed into the token contract using a function placeOrder(hash).

The sending of the commit is performed from a freshly generated address to stay anonymous until the commit is revealed in the end. The smart contract stores the hash in a mapping that maps hashValues to timeout timestamps. This timeout can either be calculated by the smart contract or be passed in as another parameter by the second computing device.

When the commit has been sent, the second computing device communicates to the first computing device using the off-chain communication channel and sends over all data that is included in the hash. By that, the first computing device can confirm that the committed values are the ones it received. The first computing device also checks if the address S has received its funds and then executes the orders specified by the second computing device.

In Fig 1b, the first computing device executes the order on connected crypto markets in step (b). At the same time in step (b), S and C are included in the next block by the mining network, depicted as 'Block hash PoW' in the figure. Note that the target address of S is not associated with the first computing device so that an observer cannot deduct that the second computing device has sent a transaction to the first computing device. The contract managing C however is associated with the first computing device, but the information encoded in there is not revealing any sensitive information about the order details.

In Fig 1c, after a timeout has passed, the second computing device sends a forwarding contract Fwd() to the address S in step (c). Fwd checks for any funds at its own address and forwards them to the GenerateNewTokens() function in the smart contract. By that, the funds located at address S are transferred to the first computing device. This step can be described as the reveal phase.

In Fig. 1d, in step (d) the first computing device's contract mints new tokens in case of a Buy transaction (or burns them when the second computing device requested a Sell trade) and assigns them to the second computing device address. This is facilitated by the GenerateNewTokens() function of the smart contract.

By that, no miner can perform frontrunning on the second computing device's order because the corresponding transaction on the blockchain is revealed after the first computing device has already acted. On the other hand, the second computing device can be sure to be assigned its tokens, as the first computing device's contract will always assign tokens to the sender of the forwarding contract upon reception of any amount of Ether.

The reader would observe that the state of the blockchain changes as new commands and actions occur in succession in Figures 1a, b, c and d.

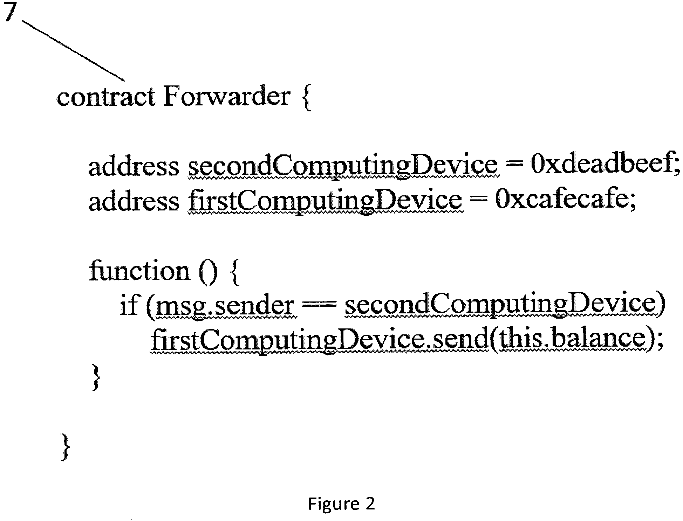

Figure 2 is a pseudo code description of one way in which a forwarding contract can be framed. As can be seen the forwarding contract has the address of the first computing device and the second computing device. As stated above, the second computing device generates the forwarding contract after a certain timeout. Then for executing the contract, the second computing device messages the forwarding contract. Upon checking that the message is from the second computing device, the contract forwards the funds located at its address (the unspent transaction address) to the first computing device. The transfer of these funds may be to the smart contract associated with the first computing device.

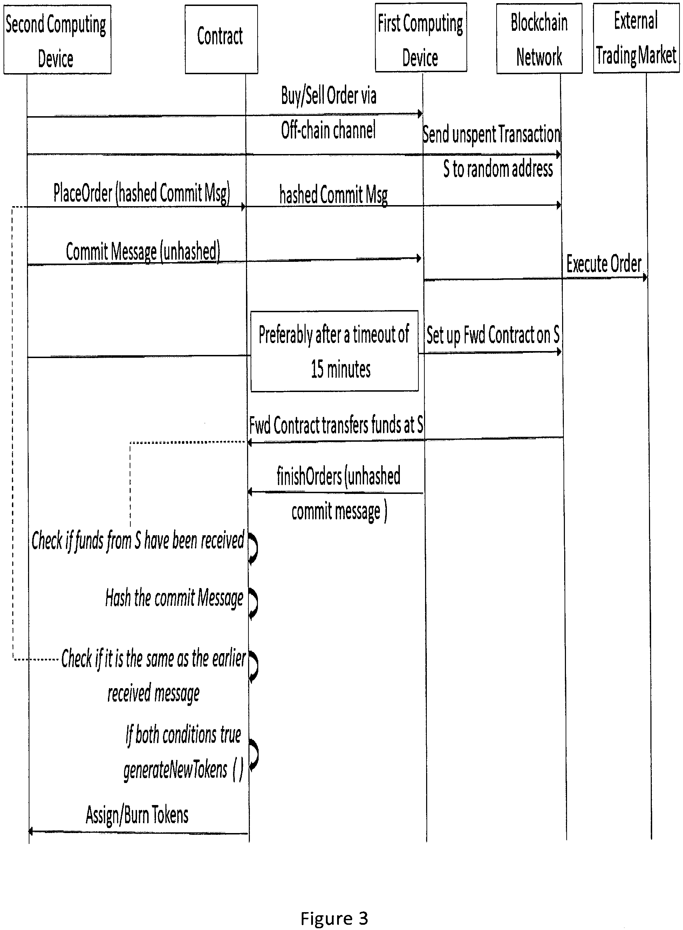

Figure 3 is a sequence diagram which illustrates the series of steps starting from the second computing device placing an order on the first computing device, and ending with the first computing device, assigning or burning tokens, to and from, the second computing device, respectively.

A second computing device sends an electronic order to a first computing device via an off-chain channel. At the same time, the second computing device also sends a seemingly random unspent transaction S to a random address in the blockchain network.

Additionally, a commit message is also sent by the second computing device to the contract, which is associated with the first computing device. This is done when the second computing device calls the placeOrder ( ) function of the contract, and passes the commit message as an argument. The commit message contains a hash of the random transaction address, the orders details, and a previously unused address of the second computing device. At the same time, this commit message and also the random transaction are broadcasted on the blockchain network, or in other words, are included in the next block by the mining blockchain network.

This commit message, in its unhashed form, is also sent by the second computing device to the first computing device via the off-chain channel. Based on this message, the first computing device can firstly analyze the random transaction address and determine if it indeed contains the funds required to carry out the order. These funds could be, by way of illustration, Bitcoins or Ether, or any currency.

Further, the first computing can also ensure that the commit message that the second computing device has sent to the contract, and which is publically available on the blockchain network, is the same as the message sent via the off-chain channel. This can be done by hashing the unhashed commit message and comparing it with the hashed commit message sent to the contract.

Once the first computing device has made certain that everything is in order, it can go ahead and execute the order on an external trading market. As stated above, this market could be any market where orders are executed rather quickly: e.g., online casinos, future markets etc.

The second computing device waits for a predetermined timeout, preferably of fifteen minutes, before setting up a forwarding contract *Fwd* on the address of the random transaction S. The forwarding contract transfers the funds located at S, to the contract. Now the transaction is publically observable and everyone that can observe the blockchain can know that the second computing device has transferred funds to the first computing device. However since the order has already been executed, front-running has been avoided.

Also, the first computing device calls the finishOrders ( ) function on the contract, and passes the commit message in its unhashed form as an argument. Upon the invocation of this function, the contract checks if funds from S have been received. The dashed lines from the condition, *"Check if funds from S have been received"* to the previous action *"Fwd contract transfers funds at S"* have been added only for the sake of the reader's ease of understanding. These dashed lines illustrate that the condition is checking whether the action occurred or not.

The contract also hashes the unhashed commit message sent by the first computing device. Then it checks whether the hashed commit message is the same that it received earlier from the second computing device. The dashed lines from the condition to the earlier action have been added only for the sake of the reader's ease of understanding.

If both conditions are true, then the contract calls the GenerateNewTokens () function, to either mint or burn tokens, in case of a buy or sell order, respectively. And finally, the tokens are assigned by the contract to the address of the second computing device.

In this way, the system brings the following advantages: **a)** Transparency and Verifiability: Since everything is recorded on the blockchain, any outside observer can reconstruct the trade history; **b)** Incentive Compatibility: The first computing device knows that the second computing device has no incentive to not transfer order related funds to it; and **c)** Since the transaction is revealed only after the order has been executed, safeguards are provided against front-running.

Furthermore, the system is computationally simple as it does not need much state information. Everything can be stored in the unspent transaction itself, apart from the commitment message that is later revealed. Also, no cryptographic messages need to be exchanged between the system entities. The one transaction into the blockchain is an exchange of a cryptographically secured message.

### List of Reference Numerals:

- 1.: First Computing Device
- 2.: Second Computing Device
- 3.: Blockchain (Miner Network)
- 4.: Commit message
- 5.: Unspent Transaction
- 6.: Time out elapse
- 7.: Forwarding contract
- 8.: Blockhash PoW

## Claims

1. A computer-implemented method for preventing front-running in a trading system, the method comprising the steps:
(a) storing a smart contract on a blockchain by a first computing device;
(b) initiating an electronic order message by a second computing device at the first computing device;
(c) sending an unspent transaction to an address on the blockchain by the second computing device;
(d) broadcasting a message on the blockchain by the second computing device, wherein the message is addressed to the smart contract, the message comprising a hash over:
i) the unspent transaction address;
ii) an unused address of the second computing device; and
iii) the electronic order details;
(e) executing by the second computing device, after a timeout, the unspent transaction output in the following way:
i) generating a script at the unspent transaction address, the script comprising a public key hash of the smart contract
ii) forwarding the output of the unspent transaction to the smart contract.

2. A computer implemented method according to claim 1, wherein the smart contract stores the message broadcasted on the blockchain, and which further at least defines:
i) a function to receive input
ii) a first condition;
iii) a second condition; and
iv) an action whose performance is dependent on the evaluation of the first and the second conditions.

3. A computer implemented method according to any of the preceding claims, wherein access to at least some of the contents of the smart contract is restricted to the first computing device.

4. A computer implemented method of any of the preceding claims wherein the second computing device sends the broadcasted message, in its unhashed form, to the first computing device via an off-chain channel.

5. A computer implemented method of any of the preceding claims wherein the off-chain channel is encrypted.

6. A computer implemented method of any of the preceding claims wherein the timeout is for a duration of fifteen minutes or less.

7. A computer implemented method any of the preceding claims wherein the script is an Ethereum forwarding contract.

8. A computer implemented method of any of the preceding claims, wherein the smart contract burns or mints tokens and assigns them to the second computing device, in the following manner:
i) the smart contract receives in the function, an input from the first computing device, wherein the input is the unhashed form of the broadcasted data;
ii) the smart contract evaluates the first condition wherein the first condition determines if the smart contract has received the output of the unspent transaction;
iii) the smart contract hashes the received input;
iv) the smart contract evaluates the second condition, wherein the second condition determines if the hash over the received input is the same as the broadcasted message; and
v) if the evaluation of the first condition is true and the evaluation of the second condition is true, the smart contract assigns or burns tokens to or from the second computing device, respectively.

9. A computer implemented method of any of the preceding claims wherein there are a plurality of first devices and/or a plurality of second devices.

10. A computing system, preferably according to the method of claims 1-9, wherein the system is configured to prevent front-running and comprises:
a first computing device configured to store a smart contract on a blockchain;
a second computing device configured to initiate an electronic order, to forward an unspent transaction to an address on the blockchain, and to broadcast a message on the blockchain, the message comprising, the unspent transaction, an unused address on the blockchain, and the electronic order details; and the second computing device is further configured to:
execute the unspent transaction output in the following manner:
generate a script at the transaction address comprising the public key hash of the smart contract, and send the output of the transaction to the contract address.
